# EUROPÄISCHE PATENTSCHRIFT

(11) **EP 2 920 062 B1**
(45) Veröffentlichungstag und Bekanntmachung des Hinweises auf die Patenterteilung: **25.07.2018**
(21) Anmeldenummer: 13802530.9
(22) Anmeldetag: 11.11.2013
(51) Int. Cl.: B63H 20/12, B63H 21/36, H01H 47/00, H01M 10/0525, B63H 23/24, B63J 3/04, B63H 21/17, H01M 2/12

(54) **BOOT MIT ELEKTROANTRIEB**
BOAT WITH ELECTRIC DRIVE
BATEAU POURVU D'UN ENTRAÎNEMENT ÉLECTRIQUE

(30) Priorität: 12.11.2012 DE 102012021996
(43) Veröffentlichungstag der Anmeldung: 23.09.2015
(73) Patentinhaber: Torqeedo GmbH, 82205 Gilching (DE)
(72) Erfinder: BIEBACH, Jens, 82327 Tutzing (DE); KRIEGER, Philipp, 82340 Feldafing (DE); HARTMEYER, Marc, 81829 München (DE)
(74) Vertreter: Nordmeyer, Philipp Werner
(86) Internationale Anmeldenummer: PCT/EP2013/003394
(87) Internationale Veröffentlichungsnummer: WO 2014/072073

(56) Entgegenhaltungen:
- US-A- 4 345 611
- US-A1- 2012 247 338

## Beschreibung

Die Erfindung betrifft ein Boot mit einer Batterie, die sich in einem Batteriegehäuse befindet.

Boote mit Elektroantrieb besitzen an Bord Batterien als Energiespeicher. Lithium-Ionen-Batterien sind hierbei bevorzugte Energiespeicher für elektrische Antriebssysteme auf Booten. Je nach benötigter Energiemenge, benötigter Spannungshöhe des Antriebssystems, verwendeter Zellchemie und Zellkapazität wird die Batterie als Reihen-und /oder Serienschaltung von Einzelzellen realisiert.

Für die sichere Nutzung einer Batterie, insbesondere einer Lithium-Ionen-Batterie, an Bord eines Bootes ist es notwendig, ein Batteriemanagement zu verwenden, welches dafür sorgt, dass die Batterie nur innerhalb ihrer sicheren Grenzen betrieben werden kann. Je nach Typ des Bootes ist der Schutz der Batterie gegen Umwelteinflüsse unterschiedlich gut und auch die Abgrenzung gegenüber Räumen, in denen sich Personen aufhalten, ist unterschiedlich intensiv.

Bei einer Bootsanwendung sind die Komponenten einer erhöhten Luftfeuchte und teilweise auch Spritzwasser ausgesetzt. Die erhöhte Luftfeuchte kann zusammen mit abwechselnder Erwärmung und Abkühlung, wie sie für den Batteriebetrieb typisch sind, zur Kondensation der Luftfeuchtigkeit innerhalb der Batterie führen. Diese Kondensation kann wiederum zur Korrosion sowie zur Beeinträchtigung von Isolierstrecken führen.

Batterien, die für den Einsatz auf Booten konzipiert sind, sind gemäß Schutzart IP67 wasserdicht auszuführen. Für den Fall des Eindringen von Wassers ins Boot oder im Fall einer Havarie dürfen keine spannungsführenden Teile mit dem Wasser in Kontakt kommen. Zur Realisierung dieser Schutznorm wird die Batterie mit einem wasserdichten Batteriegehäuse versehen.

Bei vollständig dichtem Batteriegehäuse kommt es bei Temperaturwechseln zu einer Druckdifferenz zwischen dem Batterieinnern und der Umgebung. Die Druckdifferenz kann zu einer Belastung der Dichtungen bis zu deren Versagen und / oder zu einer Deformation des Batteriegehäuses führen. Dokument US 2012/247338 A1 wird als nächstliegender Stand der Technik betrachtet und offenbart den Oberbegriff des Anspruchs 1. Aufgabe vorliegender Erfindung ist es daher, ein Boot mit einer Batterie zu entwickeln, wobei die oben genannten Probleme verhindert werden sollen.

Diese Aufgabe wird durch ein Boot mit einer Batterie gelöst, wobei sich die Batterie in einem Batteriegehäuse befindet, und welches dadurch gekennzeichnet ist, dass das Batteriegehäuse mit einem Abgasauslass versehen ist, und dass das Batteriegehäuse mit Ausnahme des Abgasauslasses gas- und wasserdicht ist und dass der Abgasauslass eine gasdurchlässige Dichtung, insbesondere eine Membran, und ein Überdruckventil umfasst.

Wie oben beschrieben, kann es bei einem vollständig dichten Batteriegehäuse bei Temperaturwechseln zu einer Druckdifferenz zwischen dem Inneren des Batteriegehäuses und der Umgebung kommen. Zur Kompensation dieser Druckdifferenz ist ein Gasaustausch zwischen dem Inneren und dem Äußeren des Batteriegehäuses notwendig. Dieser Gasaustausch kann langsam erfolgen, da sich im normalen Betrieb die Druckdifferenz auch nur langsam aufbaut. Erfindungsgemäß wird der Gasaustausch dadurch ermöglicht, dass das Batteriegehäuse einen Abgasauslass aufweist, welcher wiederum eine gasdurchlässige Dichtung, insbesondere eine in beide Richtungen gasdurchlässige Dichtung, umfasst.

Eine Batterie ist aus einer Vielzahl von seriell und/oder parallel geschalteten Batteriezellen aufgebaut. Sollte es zu einem Fehler des Batteriemanagements kommen, besteht die Gefahr, dass eine Batteriezelle beschädigt wird. In diesem Fall soll sichergestellt werden, dass die Beschädigung der Batteriezelle zu keiner Personengefährdung führt. Außerdem soll die Beschädigung der Einzelzelle keine Beschädigung der benachbarten Batteriezellen, der sonstigen Batteriekomponenten oder anderer Einheiten des Antriebssystems bzw. des Bootes nach sich ziehen.

In dem unwahrscheinlichen Fall, dass eine Lithium-Ionen-Zelle überladen wird oder ein anderweitiger Schaden an einer der Batteriezellen auftritt, besteht die Gefahr, dass plötzlich eine relativ große Menge an ätzendem und giftigem Gas entsteht. Die Gasbildung hat eine Druckerhöhung im Inneren der Batteriezelle zur Folge, welche das Batteriegehäuse schlagartig zerstören kann. Eine Explosion der Batteriezelle wäre die Folge. Um die explosive, unkontrollierte Zerstörung des Gehäuses der Batteriezelle zu vermeiden, verfügen die Batteriezellen über eine Sollbruchstelle, die bei einem definierten Zellinnendruck öffnet, bevor eine Zerstörung des übrigen Zellgehäuses stattfinden kann.

Das in einem solchen Fall aus der Batteriezelle entweichende Gas gelangt in das Batteriegehäuse, kann in der Regel über die gasdurchlässige Dichtung des Abgasauslasses nicht schnell genug abgeführt werden und führt zu einem Druckanstieg im Batteriegehäuse.

Erfindungsgemäß weist daher der Abgasauslass des Batteriegehäuses zusätzlich ein Überdruckventil auf, welches ab einem bestimmten Druck öffnet und Gas aus dem Inneren des Batteriegehäuses ablässt. Auf diese Weise wird eine Explosion des Batteriegehäuses oder der Batterie wirkungsvoll verhindert.

Die giftigen Dämpfe, die bei einem solchen Schadensfall entstehen können, sind schwerer als Luft und könnten sich daher nach dem Austritt aus der Batterie im Bootsinneren ansammeln. Von Vorteil ist daher eine gezielte Ableitung der Gase von dem Abgasauslass, insbesondere vom Überdruckventil, vorgesehen. Hierzu ist an dem Abgasauslass eine Abgasleitung angeschlossen, über die Gase und Dämpfe aus dem Inneren des Batteriegehäuses an eine Stelle, an der diese gefahrlos abgelassen werden können, insbesondere an eine Stelle außerhalb des Bootes. Die giftigen Dämpfe werden beispielsweise an die Luft oder in das Wasser abgegeben, so dass für die Besatzung des Bootes keine gesundheitliche Gefährdung durch die Gase und Dämpfe entsteht. Vorzugsweise ist die Abgasleitung als flexibler Schlauch ausgebildet.

Die Erfindung eignet sich insbesondere für Boote, die mit Lithium-Ionen-Batterien ausgerüstet sind, beispielsweise Boote mit Elektroantrieb. Die Erfindung findet insbesondere Anwendung für Batterien, die zur Energieversorgung eines Elektroantriebs eines Bootes dienen, beispielsweise für Batterien mit einer Ladung von mehr als 20Ah, zum Beispiel 20 bis 50 Ah, oder mehr als 50 Ah, zum Beispiel 50 bis 100 Ah oder von 100 bis 150 Ah, und vorzugsweise für Batterien nach Schutzart IP67.

Von Vorteil ist die gasdurchlässige Dichtung als semipermeable Membran ausgeführt. Zum Druckausgleich wird über die Dichtung das Eindringen von Luft in das Batteriegehäuse bei Abkühlung ermöglicht, wobei die semipermeable Membran aber für die in der Luft vorhandene Luftfeuchtigkeit eine Barriere darstellt. Das heißt, Wasserdampf kann über die Membran nicht in das Innere des Batteriegehäuses gelangen. Der Luftfeuchtigkeit, die sich im Inneren des Batteriegehäuses befindet, setzt die Membran beim Entweichen der Innenluft, zu dem es beim Erwärmen der Batterie kommt, keinen oder nur einen geringen Widerstand entgegen.

Damit das Gas vollständig von der Batterie in einen unkritischen Bereich abgeleitet werden kann, ist die Abgasleitung möglichst dicht an den Abgasauslass, insbesondere an das Überdruckventil, angeschlossen. Hierzu weist der Abgasauslass von Vorteil an der Stelle der gasdurchlässigen Dichtung und des Überdruckventils einen Flansch auf, der über einen Gewindeanschluss oder einen Klemmanschluss zur dichten Befestigung der Abgasleitung verfügt.

Die gasdurchlässige Dichtung, beispielsweise eine Membran, und das Überdruckventil werden vorzugsweise nebeneinander an dem Abgasauslass angeordnet. Das Batteriegehäuse kann auch einen ersten Abgasauslass mit gasdurchlässiger Dichtung besitzen, über den im normalen Betrieb des Akkumulators ein Gasaustausch zwischen dem Inneren des Batteriegehäuses und der Umgebung erfolgen kann. Außerdem kann ein zweiter Abgasauslass mit Überdruckventil vorgesehen sein, welcher dazu dient, im Schadensfall einen erhöhten Druck im Batteriegehäuse abzubauen.

Die gasdurchlässige Dichtung ist von Vorteil wasserdicht bzw. wasserundurchlässig ausgeführt, um den Eintritt von Wasser in das Batteriegehäuse zu verhindern. Das Überdruckventil ist im normalen Betrieb ohnehin geschlossen und öffnet nur im Schadensfall, in dem im Batteriegehäuse ein hoher Gasdruck herrscht. Auf diese Weise wird das Innere des Batteriegehäuses trocken gehalten.

Das Überdruckventil kann beispielsweise durch einen Stopfen realisiert werden, der in eine Einpressöffnung im Batteriegehäuse eingebracht wird. Die Einpressfläche des Stopfens ist so ausgelegt, dass der Stopfen bei einem Druck bestimmter Höhe aus der Einpressöffnung herausgedrückt wird und damit die Funktion eines Überdruckventils einnimmt. Die Druckauslöseschwelle kann durch die Querschnittsfläche des Stopfens und die Steckkraft, mit der der Stopfen in einer Einpressöffnung in dem Batteriegehäuse steckt, eingestellt werden.

In einer anderen Ausführungsform ist das Überdruckventil als Berstscheibe ausgeführt, die bei Überschreiten eines vorgegebenen Berstdruckes zerstört wird und eine Auslassöffnung freigibt.

Die gasdurchlässige Dichtung und das Überdruckventil können auch zu einer Einheit kombiniert werden. Beispielsweise kann ein Stopfen im Kernbereich über eine Membran zum ständigen Druckausgleich verfügen.

Das Material der Abgasleitung wird so gewählt, dass es der Temperatur des Gases für die Dauer des Ausströmens widersteht. Der Querschnitt der Abgasleitung wird so groß gewählt, dass die Gasmenge schnell genug entweichen kann, ohne dass es zu einem unzulässigen Druckanstieg im Batteriegehäuse kommt. Bei der Festlegung des Querschnitts der Abgasleitung wird insbesondere auch die Länge der Abgasleitung berücksichtigt. Je länger die Abgasleitung ist, umso größerer wird der Querschnitt vorgesehen, um eine Vergrößerung des Strömungswiderstandes, welcher zu einem kritischen Druckanstieg im Batteriegehäuse führen könnte, zu vermeiden.

In einer Ausführungsform der Erfindung werden die Abgasleitungen mehrerer Batterien, beispielsweise mit Y- oder T-Stücken, zu einer gemeinsamen Sammelabgasleitung verbunden, so dass nur die Sammelabgasleitung aus dem Bootsrumpf herausgeführt werden muss. Dadurch wird zum einen der Platzbedarf minimiert, zum anderen werden die Installationskosten gesenkt. Unter der Annahme, dass zeitgleiches Abblasen von Zellen in unterschiedlichen Batterien nicht vorkommt, können Sammel- und Einzelabgasleitungen über den gleichen Querschnitt verfügen.

Bei der Verwendung einer Sammelabgasleitung, an die zwei oder mehr Batterien angeschlossen sind, werden die jeweiligen Überdruckventile und gasdurchlässigen Dichtungen der einzelnen Batterien vorzugsweise so ausgeführt, dass sie einem Druckanstieg in der Sammelabgasleitung, der durch das Ablassen von Gas aus einer benachbarten Batterie hervorgerufen wurde, ohne Beeinträchtigung der Funktion widerstehen können.

Die gasdurchlässige Dichtung sollte normalerweise keiner ständigen Wasserbeanspruchung ausgesetzt sein.Von Vorteil werden daher Maßnahmen ergriffen, um das Eindringen von Wasser in die Abgasleitung zu verhindern. Zu diesem Zweck wird beispielsweise vorgesehen, die Abgasleitung an deren Auslassöffnung, d.h. an der Stelle, an der die Gase die Abgasleitung verlassen, mit einem Rückschlagventil zu versehen, welches gegenüber dem Gas einen vernachlässigbaren Strömungswiderstand hat. Das Ventil verhindert aber das Eindringen von Wasser, welches von außen gegen die Öffnung spritzt, in die Abgasleitung. Es ist auch möglich, eine anderweitige Dichtung vorzusehen, welche bidirektional gasdurchlässig ist, aber den Durchtritt von Wasser verhindert.

Eine Alternative zum Schutz der Abgasleitung gegen eindringendes Wasser besteht darin, die Abgasleitung so auszuführen und/oder anzuordnen, dass mindestens ein Abschnitt der Abgasleitung höher liegt als deren Auslassöffnung. Die Abgasleitung wird zum Beispiel im Bootsinneren zuerst hinreichend weit in einem geeigneten Winkel nach oben geführt, so dass gegen die Auslassöffnung der Abgasleitung spritzendes Wasser in der aufsteigenden Abgasleitung seine kinetische Energie abbauen kann und zurückfließt, bevor es den höchsten Punkt der Abgasleitung erreicht.

Zum Schutz gegen Kondenswasser und zum Schutz vor kleinen Wassermengen, die trotz des Rückschlagventils und / oder der aufsteigenden Abgasleitung in die Abgasleitung eindringen, ist es günstig, die Abgasleitung vor dem Anschluss an das Batteriegehäuse bzw. an den Abgasauslass des Batteriegehäuses, so tief zu führen, dass das Wasser nicht bis zum Abgasauslass vordringen kann, sondern sich an diesem tiefsten Punkt sammelt.

Es ist weiterhin günstig, an diesem tiefgelegenen Punkt eine Wasserauslassöffnung vorzusehen, damit eingedrungenes Wasser von dort wieder entweichen kann oder abgeführt werden kann. Der Querschnitt der Wasserauslassöffnung wird klein gegen den Querschnitt der Abgasleitung gewählt, so dass das Wasser zwar abfließt, im Falle des Abblasens von Gas aus dem Batteriegehäuse jedoch nur vernachlässigbare Mengen des Gases ins Bootsinnere gelangen können.

Zur Verhinderung oder Reduzierung des Abblasens von Batteriegasen über die Wasserauslassöffnung in das Bootsinnere ist es auch günstig, die Wasserauslassöffnung mit einer Einrichtung zur Durchflussbegrenzung zu versehen, so dass im Schadensfall die über die Wasserauslassöffnung entweichende Gasmenge gesteuert werden kann.

Vorzugsweise wird die Wasserauslassöffnung so in der Abgasleitung vorgesehen, dass im Falle des Gasablassens aus dem Batteriegehäuse Umgebungsluft nach dem Strahlpumpenprinzip aus der Wasserablassöffnung angesaugt wird und Zellgas aus dem Batteriegehäuse nicht über die Wasserauslassöffnung entweichen kann.

Es ist ebenso möglich, die Wasserauslassöffnung mit einem Wartungsverschluss zu versehen, der regelmäßig zum Ablassen von angesammeltem Wasser geöffnet werden kann. Vorzugsweise wird das Öffnen und Schließen des Wartungsverschlusses über einen Stellvorrichtung automatisiert. Der Wartungsverschluss wird z.B. zeitgesteuert geöffnet oder wenn das Wasser im Inneren der Abgasleitung eine bestimmte Menge überschritten hat.

Die Erfindung sowie weitere Details der Erfindung sollen anhand der schematischen Zeichnungen näher erläutert werden. Hierbei zeigen
- Figuren 1 und 2: eine erfindungsgemäße Batterie,
- Figur 3: eine Ausführungsform des Überdruckventils,
- Figur 4: eine Ausführungsform der Erfindung mit mehreren Batterien,
- Figur 5: eine Ausführungsform der Abgasleitung.

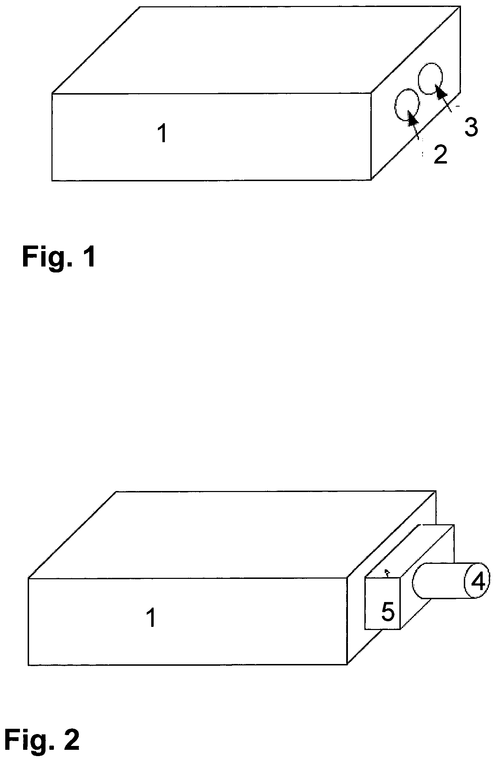

In Figur 1 ist schematisch das Batteriegehäuse 1 einer in einem Boot eingesetzten Batterie dargestellt. Die Batterie ist gemäß Schutzart IP67 mit einem gas- und wasserdichten Batteriegehäuse 1 versehen. Bei einem Temperaturanstieg kann es zu einem Druckanstieg im Batteriegehäuse 1 kommen. Erfindungsgemäß ist daher im Batteriegehäuse 1 eine gasdurchlässige Dichtung 2 vorgesehen. Die gasdurchlässige Dichtung 2 ist als semipermeable Membran ausgeführt, welche Gas in beiden Richtungen, d.h. aus dem Batteriegehäuse 1 zur Umgebung und von der Umgebung in das Batteriegehäuse 1 hinein, durchlässt. Für Wasserdampf ist die Membran 2 dagegen nur in Richtung aus dem Batteriegehäuse 1 heraus durchlässig.

Die Membran 2 ermöglicht damit den Ausgleich von Druckdifferenzen zwischen dem Inneren des Batteriegehäuses 1 und der Umgebung, welche insbesondere durch Temperaturwechsel hervorgerufen werden.

Neben der Membran 2 ist ein Überdruckventil 3 vorgesehen, welches nur dann öffnet, wenn der Druck im Inneren des Batteriegehäuses 1 einen vorgegebenen Mindestdruck übersteigt. Die Kombination aus Membran 2 und Überdruckventil 3 ermöglicht damit die Kompensation der temperaturbedingten Druckdifferenz zwischen dem Inneren des Batteriegehäuses 1 und der Umgebung im normalen Betrieb und den Ausgleich eines plötzlichen Druckanstiegs im Batteriegehäuse 1 im Falle einer Fehlfunktion oder eines Schadens an einer der Batteriezellen.

Die aus dem Batteriegehäuse 1 austretenden Gase werden in einer Abgasleitung 4 aufgefangen und aus dem Boot abgeleitet. Hierzu wird die Abgasleitung 4 an einem Anschlussstück 5, das die gasdurchlässige Dichtung 2 und das Überdruckventil 3 abdeckt, befestigt. Das aus der Dichtung 2 oder dem Überdruckventil 3 austretende Gas wird in die Abgasleitung 4 geführt. Umgekehrt kann im Falle eines Unterdrucks im Batteriegehäuse 1 Gas über die Abgasleitung 4 und die Dichtung 2 in das Batteriegehäuse 1 geleitet werden.

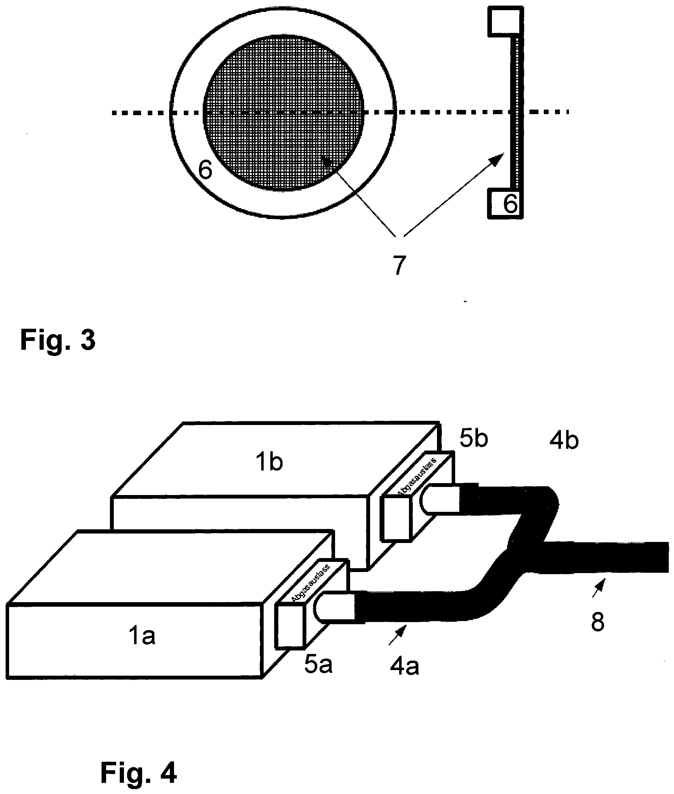

Figur 3 zeigt eine Ausführungsform der Dichtung 2 und des Überdruckventils 3. In dieser Ausführungsform sind die Dichtung 2 und das Überdruckventil 3 in einem Dichtungselement 6 vereint. Das Dichtungselement 6 ist als ein Stopfen ausgeführt, der in eine entsprechende Einpressöffnung im Batteriegehäuse 1 eingebracht wird. Steigt der Druck im Inneren des Batteriegehäuses 1 zu stark an, so wird der Stopfen 6 aus der Einpressöffnung gedrückt und die Einpressöffnung wird freigegeben, so dass der Überdruck im Batteriegehäuse 1 schnell abgebaut werden kann.

Der Stopfen 6 ist ringförmig ausgeführt und weist in seiner zentralen Fläche eine Membran 7 auf. Die Membran 7 ist gasdurchlässig und ermöglicht den Druckausgleich bei langsamen Druckanstiegen, wie sie im normalen Betrieb beispielsweise aufgrund von Temperaturänderungen, auftreten können.

In Figur 4 ist eine Anordnung von zwei Batterien und deren Batteriegehäusen 1a, 1b gezeigt. Analog zu der Ausführung nach Figur 2 ist jedes der Gehäuse 1a, 1b mit einem Anschlussstück 5a, 5b und einer Abgasleitung 4a, 4b versehen. Die beiden Abgasleitungen 4a, 4b führen in eine gemeinsame Sammelabgasleitung 8. Die Querschnitte der Abgasleitungen 4a, 4b und der Sammelabgasleitung 8 sind identisch.

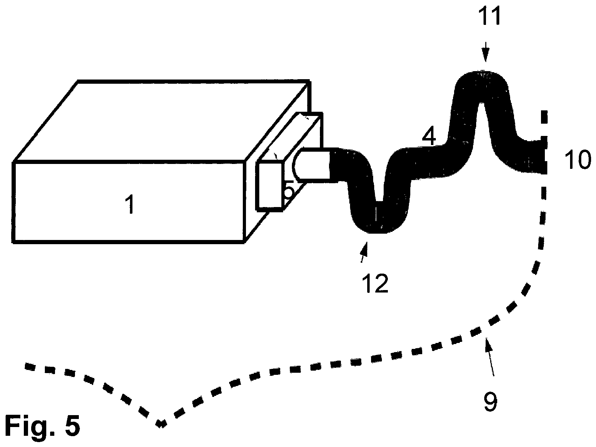

Figur 5 zeigt die Anordnung einer Batterie mit Gehäuse 1 in einem Boot 9. Die gasdurchlässige Dichtung und das Überdruckventil sind durch ein Anschlussstück 5 abgedeckt. An das Anschlussstück 5 ist eine Abgasleitung 4 angeschlossen, welche aus dem Batteriegehäuse 1 abgeblasenes Gas zu einer Öffnung 10 im Rumpf des Bootes 9 führt. Die Abgasleitung 4 ist als flexibler Schlauch ausgebildet, welcher so geführt wird, dass sich ein Abschnitt 11 der Abgasleitung 4 oberhalb der Öffnung 10 befindet. In die Öffnung 10 spritzendes und in die Abgasleitung gelangendes Wasser läuft nicht bis zum Batteriegehäuse 1, sondern muss nach oben in den erhöhten Abschnitt 11 der Abgasleitung 4 fließen. Je nachdem, um wie viel der Abschnitt 11 höher als die Öffnung 10 liegt, geht die gesamte oder ein Großteil der kinetischen Energie eindringenden Wassers verloren, so dass kein oder kaum Wasser bis zum Batteriegehäuse 1 vordringt.

Ein weiterer Abschnitt 12 der Abgasleitung 4 ist so angeordnet, dass dieser tiefer als der Abgasauslass, d.h. tiefer als die Dichtung und das Überdruckventil, liegt. Eventuell in die Abgasleitung 4 eindringendes Wasser oder kondensierender Wasserdampf sammeln sich in diesem U-förmigen Abschnitt 12. Der Abschnitt 12 kann weiterhin an seiner tiefsten Stelle mit einer Wasserauslassöffnung versehen sein, so dass sich ansammelndes Wasser abgelassen werden kann.

## Patentansprüche

1. Boot mit einer Batterie, die sich in einem Batteriegehäuse befindet, wobei das Batteriegehäuse mit einem Abgasauslass versehen ist und das Batteriegehäuse mit Ausnahme des Abgasauslasses gas- und wasserdicht ist und der Abgasauslass eine gasdurchlässige Dichtung, insbesondere eine Membran umfasst, **dadurch gekennzeichnet, dass** der Abgasauslass ein Überdruckventil umfasst, und dass die gasdurchlässige Dichtung wasserundurchlässig ist und als semipermeable Membran ausgeführt ist, welche den Durchtritt von Wasserdampf aus dem Inneren des Batteriegehäuses heraus erlaubt, aber den Durchtritt von Wasserdampf in das Innere des Batteriegehäuses verhindert.

2. Boot nach Anspruch 1, **dadurch gekennzeichnet, dass** die Batterie als Lithium-Ionen-Akkumulator ausgeführt ist.

3. Boot nach einem der vorhergehenden Ansprüche, **dadurch gekennzeichnet, dass** eine Abgasleitung an den Abgasauslass angeschlossen ist und dass sich die Auslassöffnung der Abgasleitung außerhalb des Bootes befindet.

4. Boot nach Anspruch 3, **dadurch gekennzeichnet, dass** die Abgasleitung als flexibler Schlauch ausgeführt ist.

5. Boot nach einem der vorhergehenden Ansprüche, **dadurch gekennzeichnet, dass** die gasdurchlässige Dichtung und das Überdruckventil nebeneinander angeordnet sind.

6. Boot nach einem der vorhergehenden Ansprüche, **dadurch gekennzeichnet, dass** das Überdruckventil als Stopfen ausgeführt ist, der sich in einer Öffnung des Batteriegehäuses befindet und bei Überschreiten eines vorgegebenen Drucks aus der Öffnung gedrückt wird und diese frei gibt.

7. Boot nach einem der vorhergehenden Ansprüche, **dadurch gekennzeichnet, dass** das Überdruckventil als Berstscheibe ausgeführt ist.

8. Boot nach einem der vorhergehenden Ansprüche, **dadurch gekennzeichnet, dass** in dem Boot mehrere Batterien vorgesehen sind, wobei jede der Batterien mit einem Abgasauslass und einer Abgasleitung versehen ist, wobei die Abgasleitungen der Batterien in eine Sammelabgasleitung zusammengeführt werden.

9. Boot nach Anspruch 8, **dadurch gekennzeichnet, dass** der Querschnitt der Sammelabgasleitung und die Querschnitte der Abgasleitungen gleich sind.

10. Boot nach einem der vorhergehenden Ansprüche, **dadurch gekennzeichnet, dass** die Auslassöffnung der Abgasleitung mit einer gasdurchlässigen und wasserundurchlässigen Dichtung und/oder mit einem Rückschlagventil versehen ist.

11. Boot nach einem der vorhergehenden Ansprüche, **dadurch gekennzeichnet, dass** die Abgasleitung zumindest einen Abschnitt aufweist, der höher angeordnet ist als die Auslassöffnung der Abgasleitung.

12. Boot nach einem der vorhergehenden Ansprüche, **dadurch gekennzeichnet, dass** die Abgasleitung zumindest einen Abschnitt aufweist, der tiefer angeordnet ist als der Abgasauslass.

13. Boot nach Anspruch 12, **dadurch gekennzeichnet, dass** der Abschnitt der Abgasleitung, der tiefer angeordnet als der Abgasauslass ist, eine Wasserauslassöffnung aufweist.

14. Boot nach Anspruch 13, **dadurch gekennzeichnet, dass** die Wasserauslassöffnung mit einem Wartungsverschluss versehen ist.

## Claims

1. Boat having a battery that is located in a battery housing, wherein the battery housing is provided with a waste gas outlet and the battery housing is gastight and watertight with the exception of the waste gas outlet and the waste gas outlet comprises a gas-permeable seal, in particular a diaphragm, **characterized in that** the gas outlet comprises a pressure relief valve and **in that** the gas-permeable seal is water-impermeable and is formed as a semi-permeable diaphragm, which allows the passage of water vapour out from the interior of the battery housing, but prevents the passage of water vapour into the interior of the battery housing.

2. Boat according to claim 1, **characterized in that** the battery is formed as a lithium-ion accumulator.

3. Boat according to one of the preceding claims, **characterized in that** a waste gas line is connected to the waste gas outlet, and **in that** the outlet opening of the waste gas line is located outside the boat.

4. Boat according to claim 3, **characterized in that** the waste gas line is formed as a flexible tube.

5. Boat according to one of the preceding claims, **characterized in that** the gas-permeable seal and the pressure relief valve are arranged side by side.

6. Boat according to one of the preceding claims, **characterized in that** the pressure relief valve is formed as a plug, which is located in an opening of the battery housing and is pushed out from the opening and releases said opening when a predefined pressure is exceeded.

7. Boat according to one of the preceding claims, **characterized in that** the pressure relief valve is formed as a rupture disc.

8. Boat according to one of the preceding claims, **characterized in that** a plurality of batteries are provided in the boat, each of the batteries being provided with a waste gas outlet and a waste gas line, the waste gas lines of the batteries being combined in a waste gas manifold.

9. Boat according to claim 8, **characterized in that** the cross section of the waste gas manifold and the cross sections of the waste gas lines are equal.

10. Boat according to one of the preceding claims, **characterized in that** the outlet opening of the waste gas line is provided with a gas-permeable and water-impermeable seal and/or with a check valve.

11. Boat according to one of the preceding claims, **characterized in that** the waste gas line has at least one portion that is arranged higher than the outlet opening of the waste gas line.

12. Boat according to one of the preceding claims, **characterized in that** the waste gas line has at least one portion that is arranged deeper than the waste gas outlet.

13. Boat according to claim 12, **characterized in that** the portion of the waste gas line that is deeper than the waste gas outlet comprises a water outlet opening.

14. Boat according to claim 13, **characterized in that** the water outlet opening is provided with a maintenance closure.

## Revendications

1. Bateau avec une batterie, qui se situe dans un boîtier de batterie, dans lequel le boîtier de batterie est pourvu d'une sortie de gaz d'échappement, et le boîtier de batterie à l'exception de la sortie de gaz d'échappement est étanche aux gaz et à l'eau et la sortie de gaz d'échappement comprend un joint perméable aux gaz, en particulier une membrane, **caractérisé en ce que** la sortie de gaz d'échappement comprend une soupape de surpression, et que le joint perméable aux gaz est imperméable à l'eau et est réalisé en tant que membrane semi-perméable, laquelle permet le passage de vapeur d'eau hors de l'intérieur du boîtier de batterie, mais empêche le passage de vapeur d'eau à l'intérieur du boîtier de batterie.

2. Bateau selon la revendication 1, **caractérisé en ce que** la batterie est réalisée en tant qu'accumulateur lithium-ions.

3. Bateau selon l'une quelconque des revendications précédentes, **caractérisé en ce qu'**une conduite de gaz d'échappement est raccordée à la sortie de gaz d'échappement et que l'ouverture de sortie de la conduite de gaz d'échappement se situe à l'extérieur du bateau.

4. Bateau selon la revendication 3, **caractérisé en ce que** la conduite de gaz d'échappement est réalisée en tant que tuyau flexible.

5. Bateau selon l'une quelconque des revendications précédentes, **caractérisé en ce que** le joint perméable aux gaz et la soupape de surpression sont agencés l'un à côté de l'autre.

6. Bateau selon l'une quelconque des revendications précédentes, **caractérisé en ce que** la soupape de surpression est réalisée en tant que bouchon, qui se situe dans une ouverture du boîtier de batterie et en cas de dépassement d'une pression prédéfinie est pressé hors de l'ouverture et la libère.

7. Bateau selon l'une quelconque des revendications précédentes, **caractérisé en ce que** la soupape de surpression est réalisée en tant que disque de rupture.

8. Bateau selon l'une quelconque des revendications précédentes, **caractérisé en ce que** plusieurs batteries sont prévues dans le bateau, dans lequel chacune des batteries est pourvue d'une sortie de gaz d'échappement et d'une conduite de gaz d'échappement, dans lequel les conduites de gaz d'échappement des batteries sont regroupées en une conduite de gaz d'échappement collectrice.

9. Bateau selon la revendication 8, **caractérisé en ce que** la section transversale de la conduite de gaz d'échappement collectrice et les sections transversales des conduites de gaz d'échappement sont identiques.

10. Bateau selon l'une quelconque des revendications précédentes, **caractérisé en ce que** l'ouverture de sortie de la conduite de gaz d'échappement est pourvue d'un joint perméable aux gaz et imperméable à l'eau et/ou d'un clapet anti-retour.

11. Bateau selon l'une quelconque des revendications précédentes, **caractérisé en ce que** la conduite de gaz d'échappement présente une section, qui est agencée plus haut que l'ouverture de sortie de la conduite de gaz d'échappement.

12. Bateau selon l'une quelconque des revendications précédentes, **caractérisé en ce que** la conduite de gaz d'échappement présente au moins une section, qui est agencée plus bas que la sortie de gaz d'échappement.

13. Bateau selon la revendication 12, **caractérisé en ce que** la section de la conduite de gaz d'échappement, qui est agencée plus bas que la sortie de gaz d'échappement, présente une ouverture de sortie d'eau.

14. Bateau selon la revendication 13, **caractérisé en ce que** l'ouverture de sortie d'eau est pourvue d'une fermeture de maintenance.
